# EUROPÄISCHE PATENTSCHRIFT

(11) **EP 1 535 036 B1**
(45) Veröffentlichungstag und Bekanntmachung des Hinweises auf die Patenterteilung: **22.11.2006**
(21) Anmeldenummer: 03740065.2
(22) Anmeldetag: 07.06.2003
(51) Int. Cl.: G01L 23/22, G01L 1/18

(54) **KLOPFSENSOR EINES VERBRENNUNGSMOTORS**
DETONATION SENSOR
CAPTEUR DE DETONATION POUR MOTEUR A COMBUSTION INTERNE

(30) Priorität: 04.09.2002 DE 10240671
(43) Veröffentlichungstag der Anmeldung: 01.06.2005
(73) Patentinhaber: Christian Bauer GmbH & Co., 73642 Welzheim (DE)
(72) Erfinder: BRÜCKNER, Lothar, 71229 Leonberg (DE); KÄSTNER, August, 73642 Welzheim (DE)
(74) Vertreter: Patentanwalts-Partnerschaft Rotermund + Pfusch + Bernhard
(86) Internationale Anmeldenummer: PCT/DE2003/001895
(87) Internationale Veröffentlichungsnummer: WO 2004/025238

(56) Entgegenhaltungen:
- DE-A- 19 954 164
- US-A- 4 448 059
- US-A- 4 463 610

## Beschreibung

Die Erfindung betrifft einen Klopfsensor eines Verbrennungsmotors mit einem elektronisch auswertbaren Schwingungssensor.

Bei bisher bekannten Klopfsensoren ist der Schwingungssensor unter anderem als ein keramisches Piezoelement ausgebildet. Derartige Klopfsensoren sind beispielsweise bekannt aus EP 0 47 22 19 B1, EP 0 844 470 B1 und DE 195 39 919 C2.

US 4,448,059 A offenbart einen Klopfsensor eines Verbrennungsmotors mit einem elektronisch auswertbaren Schwingungssensor, der als eine piezoresistive, fest mit einem Oberflächenbereich eines Grundkörpers aufgebrachte Schicht ausgebildet ist.

Aus DE 199 54 164 sind Sensoren zur Bestimmung von Zustandsgrößen, insbesondere Krafteinwirkung von mechanischen Komponenten unter Verwendung von amorphen Kohlenstoffschichten mit einer Dicke zwischen 10 nm bis 500 µm bekannt. Diese amorphen Kohlenstoffschichten, die insbesondere eine DLC-Schicht (Diamond Like Carbon-Schicht) sein können, zeigen piezoresistive Eigenschaften und Sie können auf Oberflächen mit unterschiedlichsten Geometrien aufgebracht werden. Aufgebracht können diese Schichten beispielsweise sein durch ein PVD- (Physical-Vapor-Deposition-) oder CVD- (Chemical-Vapor-Deposition-) Verfahren. Ein mit solchen Kohlenstoffschichten versehener Sensor kann variabel eingesetzt werden und auf einfache Art und Weise an unterschiedliche Anforderungen bestimmter Ausführungsformen angepasst werden. Mit solchen Sensoren können Kenngrößen zuverlässig und reproduzierbar gemessen werden.

Im übrigen sind zur Kontrolle kraftschlüssiger Verbindungen aus DE 19 831 372 A1 mit Messschichten versehene Unterlegscheiben bekannt.

Bei einem gattungsgemäßen Klopfsensor beschäftigt sich die Erfindung mit dem Problem, Messsignale einfach und sicher aufnehmen und in gleicher Weise einfach und sicher übertragen zu können.

Gelöst wird dieses Problem durch eine Ausführung eines gattungsgemäßen Klopfsensors nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, bei einem gattungsgemäßen Klopfsensor durch das Applizieren einer dünnen Messschicht direkt auf die Oberfläche eines nicht ausschließlich Schwingungssensorfunktion ausübenden Bauteiles gegenüber dem bisherigen Stand der Technik ein zusätzliches, üblicherweise den Schwingungssensor darstellendes Bauteil einzusparen. Appliziert ist die Messschicht erfindungsgemäß auf eine in einem Klopfsensor als Verspannungselement enthaltene Tellerfeder. Dabei kann die Tellerfeder insbesondere derart ausgebildet sein, dass die übliche seismische Masse des Klopfsensors, die innerhalb des Klopfsensors über eine Tellerfeder gespannt ist, integraler Bestandteil der Tellerfeder ist.

Bei erfindungsgemäß eingesetzten piezoresistiven amorphen Kohlenstoffschichten erzeugen die Schwingungen des Verbrennungsmotors, wenn diese auf die Tellerfeder einwirken, Spannungsänderungen in der Schicht, die elektronisch in an sich üblicher Weise ausgewertet werden können. Bei dem Einsatz einer erfindungsgemäßen Tellerfeder mit einer piezoresistiven amorphen Kohlenstoffschicht wird die Verformung der Tellerfeder zur Erzeugung elektrisch erfassbarer Spannungsänderungen in der Schicht verwendet.

Die hohe Messempfindlichkeit der erfindungsgemäßen Messschicht eignet sich besonders gut für eine telemetrische Signalauswertung. Bezüglich des Prinzips hier anwendbarer telemetrischer Signalauswerteverfahren wird im Stand der Technik beispielsweise verwiesen auf DE 40 34 019 C1, EP 0 533 709 B1 und DE 37 14 195 A1.

Vorteilhafte und zweckmäßige Ausgestaltungen der Erfindung sind in der Zeichnung dargestellt.

In dieser zeigen jeweils in einem Längsschnitt
- Fig. 1: einen Klopfsensor mit einer Tellerfeder in einer ersten Ausführung zwischen einer seismischen Masse und einem an einem Verbrennungsmotor fest montierbaren Widerlager,
- Fig. 2: einen Klopfsensor nach Fig. 1 mit einer Unterlegscheibe oder Tellerfeder im planen Zustand nach Fig. 1,
- Fig. 3: einen Klopfsensor nach Fig. 1 mit einer über eine Spezialschraube definiert vorgespannten Tellerfeder,
- Fig. 4: einen Klopfsensor mit einer Tellerfeder und einer diese spannenden, direkt mit dem Verbrennungsmotor verschraubbaren Spezialschraube,
- Fig. 5: einen Klopfsensor mit einer zwischen zwei Tellerfedern eingespannten seismischen Masse.

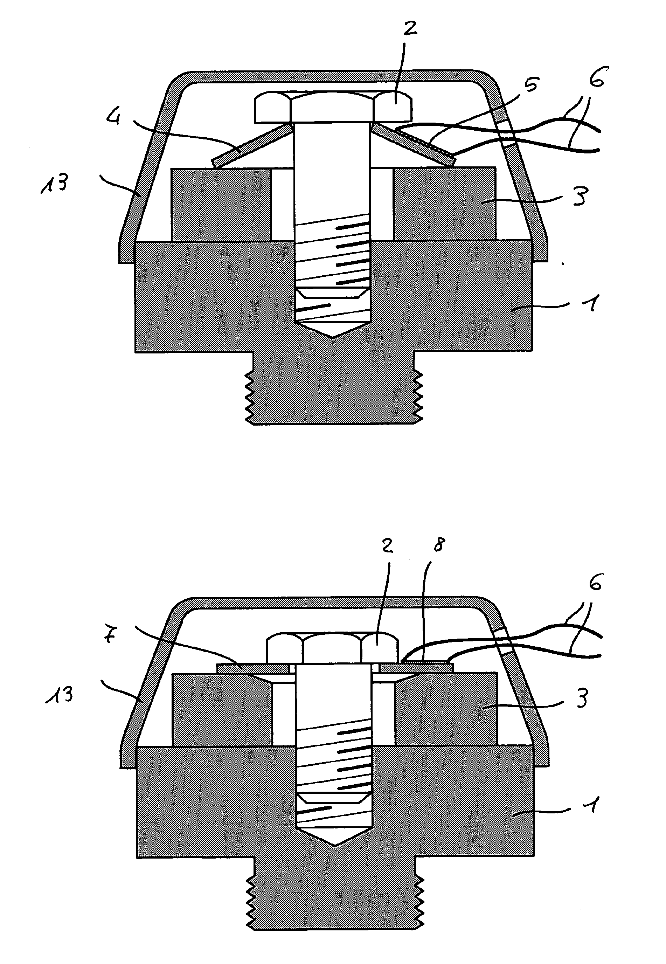

Ein Klopfsensor nach Fig. 1 umfasst einen Befestigungskörper 1 zum festen Anschrauben an das Gehäuse eines Verbrennungsmotors und eine in dem Befestigungskörper 1 verankerte Schraube 2, mit deren Kopf eine seismische Masse 3 unter Zwischenschaltung einer Tellerfeder 4 gegenüber dem Befestigungskörper 1 verspannt ist.

Die zum Kopf der Schraube 2 weisende Stirnseite der Tellerfeder 4 ist bereichsweise mit einer DLC-Schicht als piezoresistiver amorpher Kohlenstoffschicht versehen, von der aus elektrische Leitungen 6 zu einer in der Zeichnung nicht dargestellten elektronischen Auswerteeinheit führen. Die Dicke der Schicht liegt bevorzugt in einem Bereich zwischen 1 bis 10 µm.

Im Falle des Klopfens eines Verbrennungsmotors wird die von der Tellerfeder 4 kraftbeaufschlagte, als ringförmiges Bauteil ausgeführte seismische Masse 3 angeregt und übt eine entsprechende Belastung auf die Tellerfeder 4 aus. Die auf der Tellerfeder 4 angebrachte DLC-Schicht 5 erfährt hierdurch eine entsprechende Spannungsänderung, die über die elektrischen Leitungen 6 einer Auswerteelektronik zugeführt und dort ausgewertet wird. Zusammen mit der DLC-Schicht 5 kann für die Übertragung der aus der Schicht 5 stammenden Messsignale ein Transponder auf dem betreffenden Bauteil für eine telemetrische Übertragung vorgesehen sein. Bei Anwendung dieser an sich bekannten Technik können die üblichen Übertragungskabel sowie deren Anschlussmittel eingespart werden. Dies ist ein erheblicher Kostenvorteil.

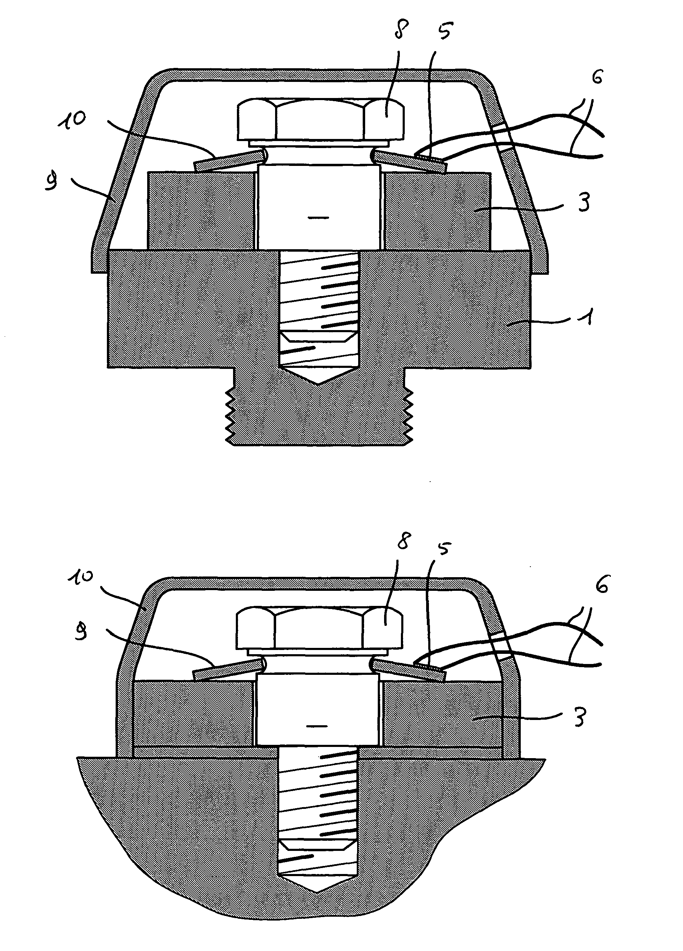

Bei der Ausführung nach Fig. 2 ist die Tellerfeder in der Form einer Unterlegscheibe 7 als praktisch eine flachgespannte Tellerfeder 4 eingesetzt.

Grundsätzlich kann eine erfindungsgemäße DLC-Schicht 5 jeweils auf beiden Seiten der Tellerfeder 4, 7 aufgebracht sein.

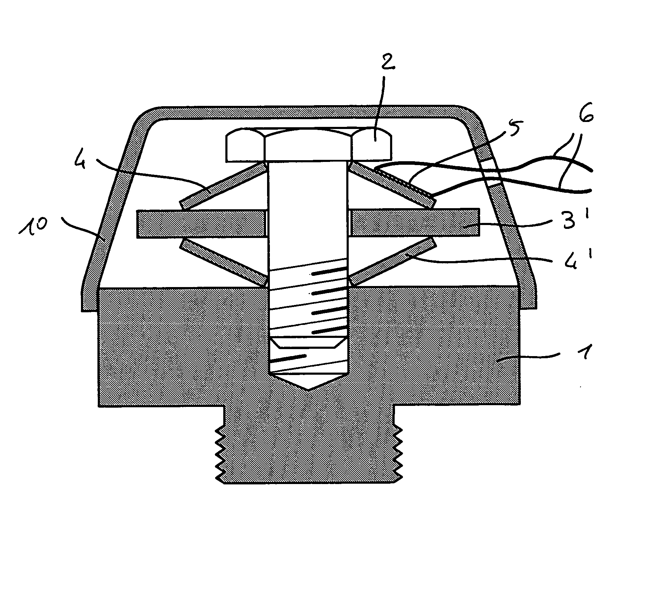

Fig. 3 zeigt einen Klopfsensor, bei dem als Schraube zum Verspannen der Tellerfeder 4 eine Spezialschraube 8 eingesetzt ist, mit der eine definierte Verspannung der Tellerfeder 4 auf einfache Weise durch das Vorsehen eines in die Schraube 8 integrierten Anschlagbundes 9 erzielbar ist.

Bei Verwendung der Spezialschraube 8 kann entsprechend der Ausführung nach Fig. 4 auf einen einschraubbaren Befestigungskörper verzichtet werden.

Bei der Ausführung nach Fig. 5 ist eine seismische Masse 3' zwischen zwei Tellerfedern 4, 4' eingespannt. Hierdurch kann insbesondere eine kleinere seismische Masse eingesetzt werden, soweit eine solche überhaupt noch erforderlich ist.

Sämtliche gezeichneten Klopfsensoren besitzen ein Abdeckgehäuse 10.

## Patentansprüche

1. Klopfsensor eines Verbrennungsmotors mit einem elektronisch auswertbaren Schwingungssensor, der als eine piezoresistive amorphe, fest auf einem Oberflächenbereich eines Grundkörpers (1, 4, 4', 10) aufgebrachte Kohlenstoffschicht. (5; 8; 9; 10),
**dadurch gekennzeichnet durch die Merkmale**
- die Kohlenstoffschicht 10 nm bis 500 µm, insbesondere 10 nm bis 20 µm, misst;
- der Klopfsensor umfasst mindestens eine gegenüber dem Verbrennungsmotor gespannte beziehungsweise verspannbare Tellerfeder (4, 4'),
- auf mindestens einer der Stirnseiten der mindestens einen Tellerfeder (4, 4') ist eine piezoresistive amorphe Kohlenstoffschicht (5) aufgebracht.

2. Klopfsensor nach Anspruch 1,
**dadurch gekennzeichnet,**
**dass** die Kohlenstoffschicht 10 nm bis 500 µm, vorzugsweise 10 nm bis 20 µm misst.

3. Klopfsensor mit einer seismischen Masse (3, 3') nach Anspruch 1 oder 2,
**dadurch gekennzeichnet,**
**dass** die vorhandene, mindestens eine piezoresistive amorphe Kohlenstoffschicht (8; 9; 10) zwischen der seismischen Masse (3, 3') und einem fest mit dem Verbrennungsmotor verbundenen bzw. verbindbaren Widerlager (1) beziehungsweise (2) vorgesehen ist.

4. Klopfsensor nach einem der vorhergehenden Ansprüche,
**dadurch gekennzeichnet,**
**dass** mindestens zwei Tellerfedern (4, 4') in Reihe mit oder ohne zwischengeschalteter seismischer Masse (3') vorgesehen sind.

5. Klopfsensor nach Anspruch 3 oder 4,
**dadurch gekennzeichnet,**
**dass** die seismische Masse (3, 3') in mindestens eine Tellerfeder (4, 4') integriert ist.

6. Klopfsensor nach einem der vorhergehenden Ansprüche,
**dadurch gekennzeichnet,**
**dass** dieser mit Mitteln für einen telemetrischen Signalabgriff versehen ist.

## Claims

1. A knock sensor for an internal combustion engine with an electronically evaluated vibration sensor that is realized in the form of a piezoresistive amorphous carbon layer (5; 8; 9; 10) wherein this layer is rigidly applied onto a surface section of a base body (1, 4, 4' , 10),
**characterized in**
- the carbon layer has a thickness between 10 µm and 500 µm, particularly between 10µm and 20 µm,
- that the knock sensor comprises at least one spring washer (4, 4') that is or can be tensioned relative to the internal combustion engine, and **in**
- **that** a piezoresistive amorphous carbon layer (5) is applied onto at least one face of the at least one spring washer (4; 4').

2. The knock sensor according to Claim 1,
**characterized in**
**that** the carbon layer measures between 10 nm and 500 µm, preferably between 10 nm and 20 µm.

3. The knock sensor with a seismic mass (3, 3') according to Claim 1 or 2,
**characterized in**
**that** the at least one piezoresistive amorphous carbon layer (8; 9; 10) is arranged between the seismic mass (3, 3') and an abutment (1) or (2) that respectively is or can be rigidly connected to the internal combustion engine.

4. The knock sensor according to one of the preceding claims,
**characterized in**
**that** at least two spring washers (4, 4') are arranged in series with or without a seismic mass (3') provided in between.

5. The knock sensor according to Claim 3 or 4,
**characterized in**
**that** the seismic mass (3, 3') is integrated into at least one spring washer (4, 4').

6. The knock sensor according to one of the preceding claims,
**characterized in**
**that** said knock sensor is provided with means for a telemetric signal tap.

## Revendications

1. Capteur de détonation d'un moteur à combustion interne avec un capteur de vibrations évaluable par voie électronique, qui est réalisé sous forme de couche de carbone amorphe piézorésistive (5 ; 8 ; 9 ; 10) appliquée fixement sur une zone superficielle d'un corps de base (1, 4, 4', 10), **caractérisé par** les caractéristiques
- la couche de carbone mesure 10 nm à 500 µm, en particulier 10 nm à 20 µm,
- le capteur de détonation comprend au moins un ressort à disque (4, 4') tendu ou pouvant être tendu par rapport au moteur à combustion interne,
- une couche de carbone amorphe piézorésistive (5) est appliquée sur au moins l'un des côtés frontaux du au moins un ressort à disque (4, 4').

2. Capteur de détonation suivant la revendication 1, **caractérisé en ce que** la couche de carbone mesure 10 nm à 500 µm, de préférence 10 nm à 20 µm.

3. Capteur de détonation avec une masse sismique (3, 3') suivant l'une des revendications 1 et 2, **caractérisé en ce que** la au moins une couche de carbone amorphe piézorésistive (8 ; 9 ; 10) disponible est prévue entre la masse sismique (3, 3') et une butée (1) ou (2) assemblée ou pouvant être assemblée fixement avec le moteur à combustion interne.

4. Capteur de détonation suivant l'une des revendications précédentes, **caractérisé en ce qu'**au moins deux ressorts à disques (4, 4') sont prévus en série avec ou sans masse sismique (3') intercalée.

5. Capteur de détonation suivant l'une des revendications 3 et 4, **caractérisé en ce que** la masse sismique (3, 3') est intégrée dans au moins un ressort à disque (4, 4').

6. Capteur de détonation suivant l'une des revendications précédentes, **caractérisé en ce qu'**il est muni de moyens pour une prise de signaux télémétrique.
